# EUROPÄISCHE PATENTSCHRIFT

(11) **EP 3 165 796 B1**
(45) Veröffentlichungstag und Bekanntmachung des Hinweises auf die Patenterteilung: **10.04.2019**
(21) Anmeldenummer: 16002368.5
(22) Anmeldetag: 20.02.2004
(51) Int. Cl.: F16H 57/02, H02K 7/116

(54) **GETRIEBEMOTOR**
GEAR MOTOR
MOTO-REDUCTEUR

(30) Priorität: 28.02.2003 DE 10309212; 22.03.2003 DE 10312941
(43) Veröffentlichungstag der Anmeldung: 10.05.2017
(62) Teilanmeldung aus: 04713018.2
(73) Patentinhaber: SEW-EURODRIVE GmbH & Co. KG, 76646 Bruchsal (DE)
(72) Erfinder: Christ, Michael, 48249 Dülmen (DE); Zimmermann, Heinrich, 76646 Bruchsal (DE); Denefleh, Roland, 64683 Einhausen (DE); Megerle, Jürgen, 76694 Forst (DE); Sander, Joachim, 76698 Ubstadt-Weiher (DE)

(56) Entgegenhaltungen:
- WO-A2-02/21895
- DE-A1- 3 502 015
- DE-A1- 4 401 164
- DE-B1- 2 347 523
- DE-C1- 19 846 235
- US-A- 3 234 808

## Beschreibung

Die Erfindung betrifft einen **Getriebemotor.**

Aus der DE 197 04 226 A1 ist ein beispielhafter Umrichtermotor bekannt, wobei am Klemmenkasten des Motors ein Umrichter zur Versorgung des Motors verbunden ist.

Getriebemotoren umfassen Motoren, die zumindest mit einem Getriebe direkt oder indirekt verbunden sind.

Aus der DE 101 16 595 A1 ist eine Baureihe von Getriebemotoren bekannt, bei der eine Motorwelle mit einem Einsteckritzel oder einem Aufsteckritzel verbindbar ist. Allerdings ist für das Aufsteckritzel ein Adapter notwendig.

**Aus der** DE 198 46 235 C1 **ist als nächstliegender Stand der Technik ein Getriebemotor mit den Merkmalen des Oberbegriffs des Anspruch 1 bekannt.**

Der Erfindung liegt daher die Aufgabe zugrunde, einen **Getriebemotor** weiterzubilden.

Erfindungsgemäß wird die Aufgabe bei dem **Getriebemotor** nach den in Anspruch 1 angegebenen Merkmalen gelöst.

Vorteilig ist dabei, dass die Fertigungstoleranzen verringerbar **sind.**

Von Vorteil ist **bei dem offenen Einpass,** dass das Ritzel der einzuführenden Adapterwelle oder Rotorwelle radial derart verschiebbar ist samt der zugehörigen Komponente, dass es in die gewünschte Position bringbar ist. Bei Stirnradgetriebestufe bedeutet dies eine Einstellmöglichkeit für das Spiel, bei der Planetengetriebestufe ein Zentrieren des Sonnenrades.

**Erfindungsgemäß** ist als erstes Mittel zur Kompensation axialer Ausdehnungen eine Balgkupplung vorgesehen Von Vorteil ist dabei, dass in einfacher kostengünstiger Weise Lage und Positionsabweichungen der Wellen, also der Adapterwelle und der Rotorwelle, ausgleichbar sind und auch thermisch bedingte Ausdehnungen kompensierbar sind.

Bei einer vorteilhaften Ausgestaltung sind die Getriebe der Baureihe derart spielarm ausgeführt, insbesondere nach Spieleinstellung mittels der Verschiebungen, dass das Spiel kleiner ist als 3 Winkelminuten pro einzelne Getriebestufe und/oder Getriebe insgesamt. Von Vorteil ist dabei, dass die Getriebe für Servotechnik verwendbar sind.

Bei einer vorteilhaften Ausgestaltung umfasst das querkraftfreie, mit dem Adapterteil verbundene Getriebe mit einseitiger Lagerung ein höheres Luftvolumen zum Druckausgleich als das querkraftfreie Getriebe mit beidseitiger Lagerung. Von Vorteil ist dabei, dass thermisch verursachte Luftdruckerhöhungen reduzierbar sind und somit die Gefahr der Undichtheit des Getriebes verminderbar ist.

Bei einer vorteilhaften Ausgestaltung weist das Getriebe als eintreibende Stufe eine Planetengetriebestufe auf. Von Vorteil ist dabei, dass ein eintriebsseitig querkraftfreies Servogetriebe mit hoher Übersetzungszahl vorgesehen ist.

Bei einer vorteilhaften Ausgestaltung ist das nicht-querkraftfreie Getriebe ein zweistufiges Getriebe, dessen eintriebsseitig angeordnete Getriebestufe als Stirnradstufe, insbesondere mit schrägverzahnten Zahnrädern, ausgeführt ist. Von Vorteil ist dabei, dass somit eine hohe Übersetzung bei diesem zweistufigen Getriebe erreichbar ist und die eintreibende Stirnradstufe kostengünstig herstellbar ist.

Bei einer vorteilhaften Ausgestaltung ist die zweite Stufe des nichtquerkraftfreien Getriebes eine Winkelgetriebestufe. Von Vorteil ist dabei, dass nicht nur kolineare Servogetriebe sondern auch Winkel-Servogetriebe mit einer geringen Anzahl von Teilen herstellbar sind.

Bei einer vorteilhaften Ausgestaltung ist das Winkelgetriebe einstufig ausgeführt, insbesondere als Hypoidgetriebe. Von Vorteil ist dabei, dass auf diese Weise ein nichtkolineares Getriebe mit hoher Übersetzungszahl innerhalb der Baureihe herstellbar ist.

Bei einer vorteilhaften Ausgestaltung sind die Getriebe Servogetriebe, insbesondere also zum genauen Positionieren vorgesehen sind.

Weitere Vorteile ergeben sich aus den Unteransprüchen.

Die Erfindung wird nun anhand von Abbildungen näher erläutert:
Figur 1 zeigt einen Teil **ein**er Baureihe, wobei die Komponenten in ihren Kombinationsmöglichkeiten veranschaulicht sind.
Figur 10 zeigt einen weiteren Teil der Baureihe, wobei ebenfalls die Komponenten in ihren Kombinationsmöglichkeiten veranschaulicht sind.

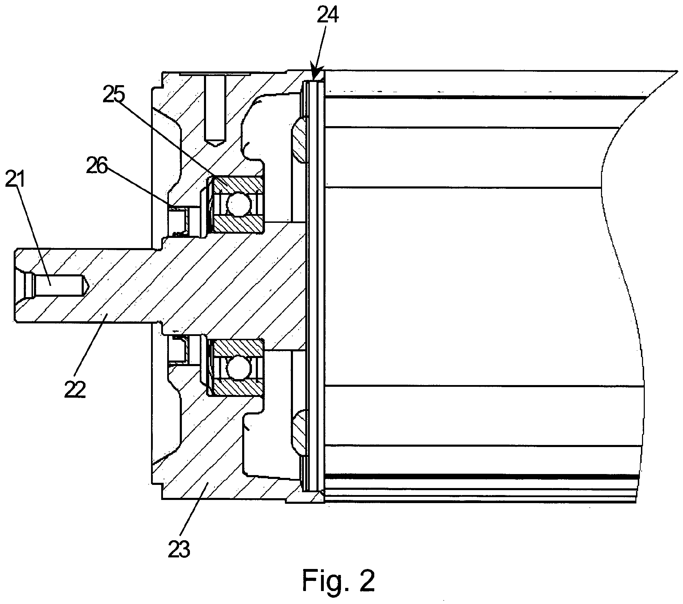

Figur 2 bis 4 zeigen die Motorlagerschilder 12 bis 14 der Motoren als Einzelteile.

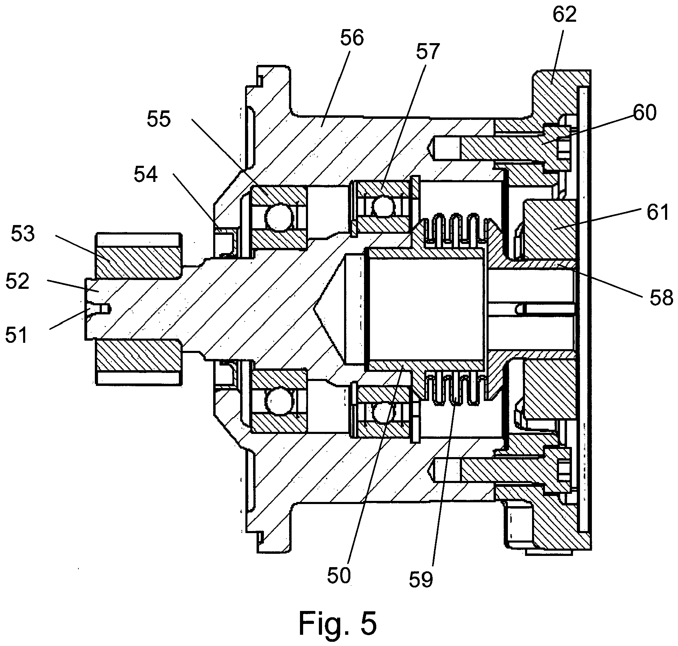

Figur 5, 6 und 11 zeigen die Adapter-Einzelteile 5, 6 und 11.

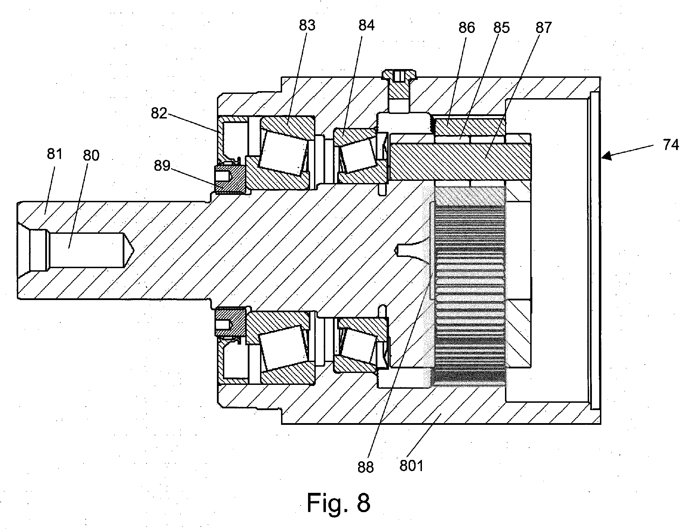

Figuren 8, 9 und 10 zeigen die Planentengetriebeteile.

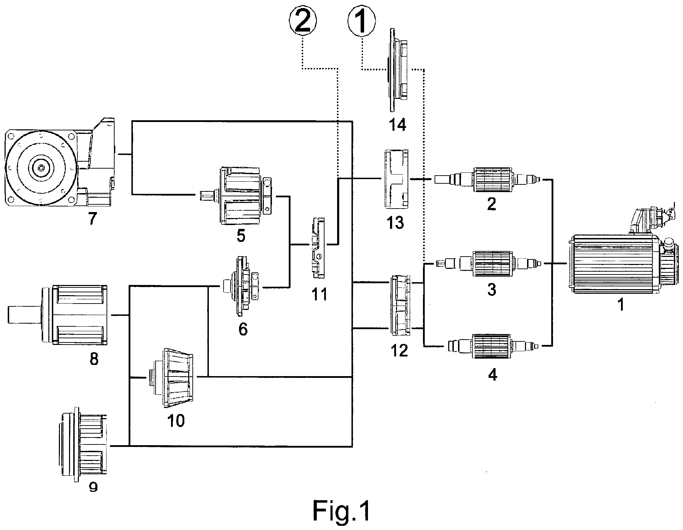

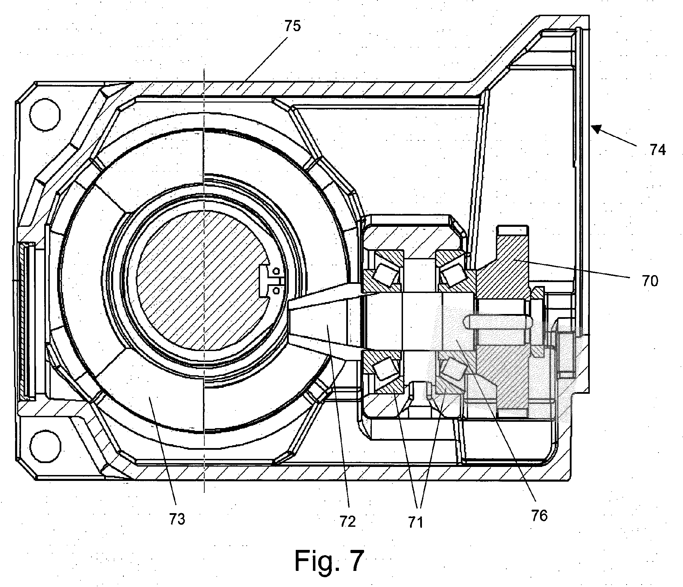

Figur 7 zeigt das Winkelgetriebe 7 der Figur 1 als Einzelteil.

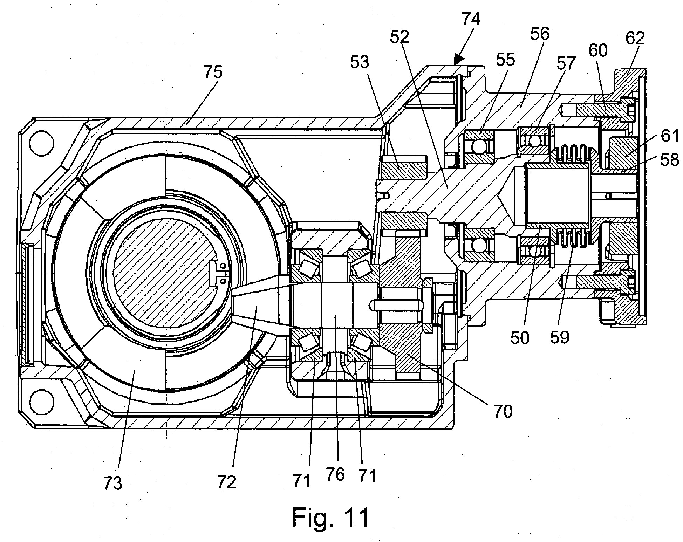

Figur 11 zeigt ein zweistufiges Winkelgetriebe mit Adapter.

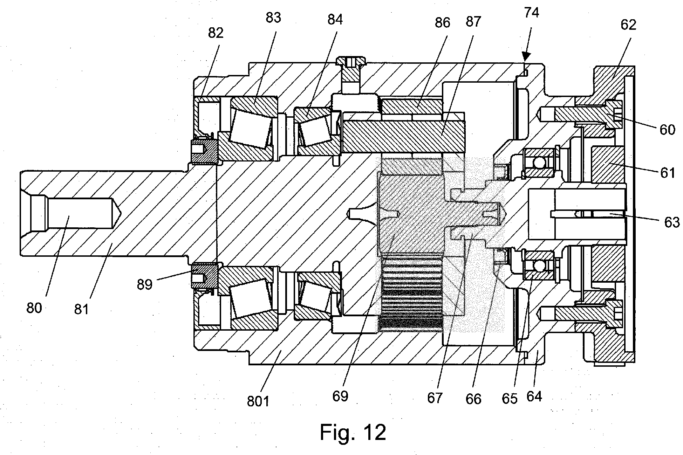

Figur 12 zeigt ein Planetengetriebe mit Adapter.

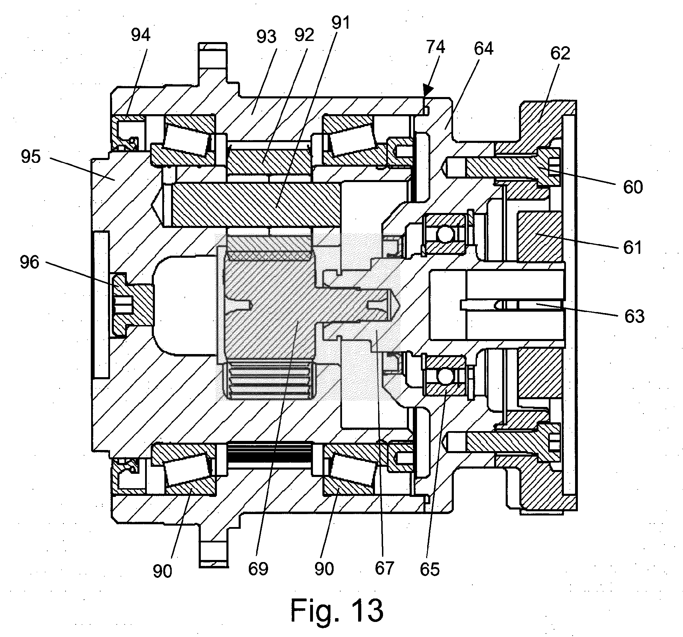

Figur 13 zeigt ein Planetengetriebe mit Adapter.

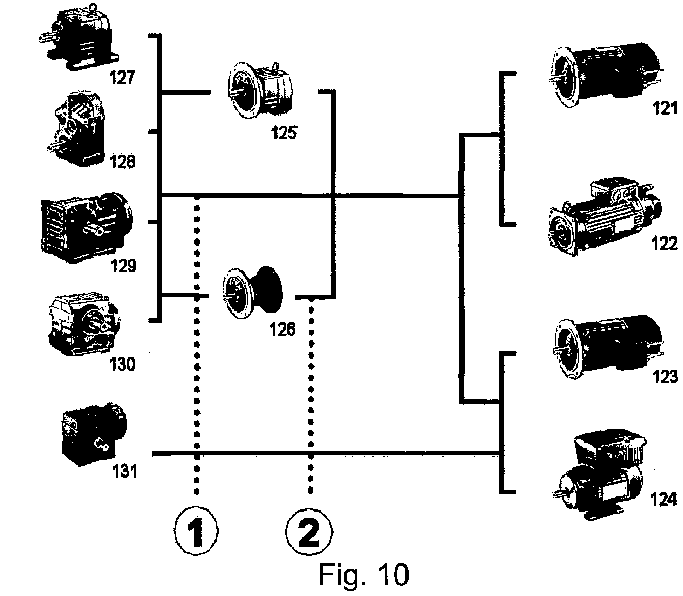

In der Figur 10 ist die Kombinationsmöglichkeit bei einer Baureihe von Getrieben gezeigt. Dabei ist der Bausatz für die Baureihe von Getriebemotoren derart ausgelegt, dass verschiedene Motoren an verschiedene Getriebe direkt oder mittels Adapter verbindbar sind. Die in Figur 10 gezeigten Getriebe müssen nicht als Servogetriebe ausgeführt sein.

In der Figur 1 ist ein erfindungswesentlicher Teil gezeigt, der mit der Baureihe von Getriebemotoren kompatibel ist, also entsprechende Schnittstellen aufweist. Dieser Teil umfasst Servogetriebemotoren, die in verschiedener Kombinatorik zusammenstellbar sind. Die dabei gezeigten und mit den Motoren verbindbaren Getriebe sind Servogetriebe.

Im Folgenden soll nun zunächst auf diesen, in der Figur 1 gezeigten Teil eingegangen werden:
Der Motor umfasst ein Motorgehäuse 1 mit Stator. Je nach Bedarf ist ein Geber und/oder eine Bremse B-seitig anschließbar. A-seitig weist das Gehäuse eine Schnittstelle zum Verbinden mit einem Motorlagerschild 12, 13, 14 auf. Die Schnittstelle ist gebildet mittels der A-seitigen geometrischen Ausformung des Motorgehäuses und der Positionierung der Bohrungen. Die passende Gegenschnittstelle ist im Motorlagerschild 12, 13 ,14 ausgeführt. Somit ist das Motorgehäuse 1 mit allen Motorlagerschildern 12, 13,14 verbindbar, die sich jeweils aber wiederum an anderen Stellen unterscheiden. Insbesondere sind die zugehörigen Lagersitze der Lager und/oder Wellendichtringsitze verschieden ausführbar und/oder es sind verschiedene Rotorwellen aufnehmbar. Der Rotor 2,3,4, umfassend jeweils die Rotorwelle, ist verschieden auszuwählen. Ein B-seitiges Lager des Rotors 2,3,4 ist vom Motorgehäuse umfasst. Das weitere A-seitige Lager ist vom Motorlagerschild umfasst.

Der Rotor 2 ist mit einem A-seitigen zylindrischen Wellenende ausgeführt. Dies ist auch in Figur 2 deutlich gezeigt. Dabei umfasst die Rotorwelle 22 des Rotors 2 auch eine Zentrierbohrung 21. Das Motorlagerschild 23 umfasst einen Lagersitz für das Lager 25 und einen Wellendichtringsitz für den Wellendichtring 26. Die Schnittstelle 24 ist in der oben erwähnten Weise beim Motorlagerschild und beim Motorgehäuse ausgeführt, wobei die Bohrungen und Schrauben zur Verbindung des Motorlagerschildes und des Motorgehäuses nicht gezeigt sind.

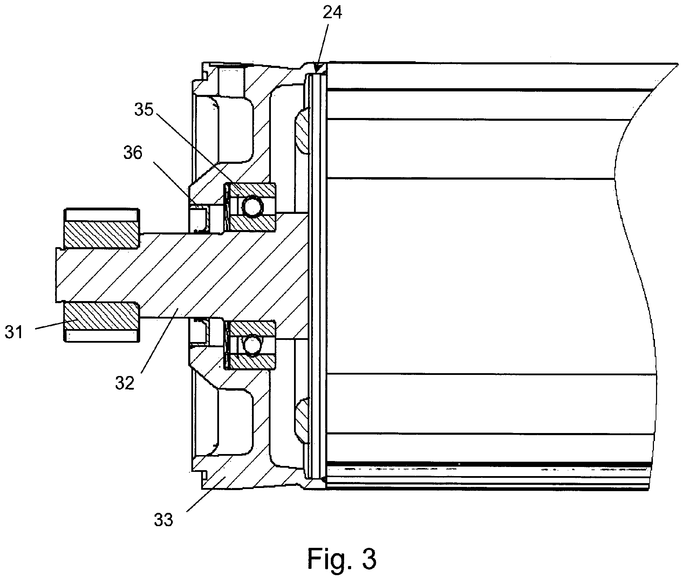

Der Rotor 3 ist gemäß Figur 3 mit der Rotorwelle 32 ausgeführt, wobei die Rotorwelle 32 mittels des Lagers 35 im Motorlagerschild 33, das dem Motorlagerschild 12 entspricht, gelagert ist und mittels des Wellendichtrings 36 gegen dieses abgedichtet ist. Die Schnittstelle 24 des Motorlagerschildes 33 ist wiederum passend zum selben Motorgehäuse ausgeführt, wie auch bei Figur 2. Die Rotorwelle 32 des Rotors 3 ist A-seitig mittels einer Passfeder mit einem Aufsteckritzel 31 verbunden.

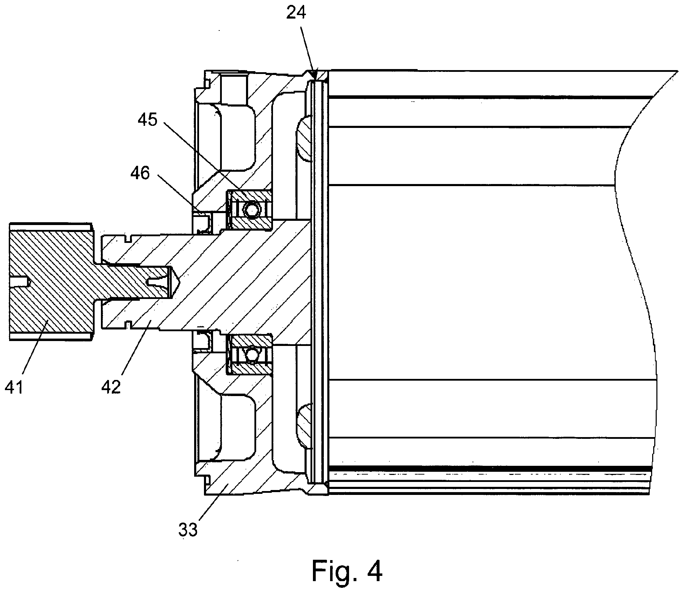

Der Rotor 4 ist gemäß Figur 4 mit der Rotorwelle 42 ausgeführt, wobei die Rotorwelle 42 mittels des Lagers 45 im Motorlagerschild 33, das dem Motorlagerschild 12 entspricht, gelagert ist und mittels des Wellendichtrings 46 gegen dieses abgedichtet ist. Die Schnittstelle 24 des Motorlagerschildes 33 ist wiederum passend zum selben Motorgehäuse ausgeführt, wie auch bei Figur 2. Die Rotorwelle 42 des Rotors 4 ist A-seitig mit einem Einsteckritzel 41 verbunden.

Der Rotor 2,3,4 ist in weiteren erfindungsgemäßen Ausführungsbeispielen in verschiedenen elektromechanischen Varianten, insbesondere als Rotor mit Kurzschlusskäfig zur Bildung eines Asynchronmotors oder als Rotor mit aufgeklebten Magneten zu Bildung eines Synchronmotors, ausführbar. Es sind aber auch weitere Varianten von Motoren verwendbar, wie Reluktanzmotoren, Gleichstrom- oder sonstige Elektromotoren. Dazu ist die Schnittstelle und der Rotor entsprechend passend auszuführen.

Statt des Motorlagerschildes 12 ist auch das Motorlagerschild 14 mit den Rotoren 3 oder 4 verwendbar, wobei das Motorlagerschild 14 dieselbe Schnittstelle 24 zum Motorgehäuse 1 hin aufweist. Mittels diesem Motorlagerschild 14 ist nun der Anschluss aller Getriebe 127, 128, 129, 130, die einen entsprechenden Flansch aufweisen und in Figur 10 gezeigt sind, ermöglicht. Getriebe, die wie das Winkelgetriebe 131 mit einem ins Getriebegehäuse integrierten Motorlagerschild ausgeführt sind, sind selbstverständlich nicht anschließbar. Erst bei einem Weglassen des genannten Motorlagerschildes 14 ist es anschließbar.

In weiteren Ausführungsbeispielen ist auch jedes Motorlagerschild als Quadratflansch ausführbar. Somit ergeben sich weitere Kombinationsmöglichkeiten mit nur wenig mehr Aufwand an Komponenten.

Bei dem Ausführungsbeispiel nach Figur 1 ist der mit dem Motorlagerschild 12 gebildete Motor mit einem Planetengetriebe mit oder ohne Planetengetriebevorstufe 10 oder mit einem Winkelgetriebe 7 verbindbar. Dabei ist das Planetengetriebe als Planetengetriebe 8 mit zylindrischem Abtriebswellenende oder als Planetengetriebe 9 mit Flanschblockabtrieb ausgeführt.

Bei dem Ausführungsbeispiel nach Figur 1 ist der mit dem Motorlagerschild 13 gebildete Motor über den aus dem Adapterflansch 11 und dem Adapterteil 6 gebildeten Adapter mit einem Planetengetriebe mit oder ohne Planetengetriebevorstufe 10 oder über den aus dem Adapterflansch 11 und dem Adapterteil 5 gebildeten Adapter mit dem Winkelgetriebe 7 verbindbar. Dabei ist das Planetengetriebe als Planetengetriebe 8 mit zylindrischem Abtriebswellenende oder als Planetengetriebe 9 mit Flanschblockabtrieb ausgeführt.

Der Asynchronmotor 121 ist als Normmotor nach IEC-Norm ausführbar. Jedoch sind auch weitere herstellereigene Ausführungen verwendbar. Eine herstellereigene Ausführungsform ist auch in Figur 1 gezeigt. Dabei ist das Motorgehäuse 1 für verschiedene Motoren verwendbar, die sich durch Motorlagerschild 12, 13, 14 und Rotoren 2,3,4 unterscheiden. Insbesondere ist auch ein Rotor 4 mit Einsteckritzel und ein Rotor 3 mit Aufsteckritzel vorsehbar. Dadurch ist ein extrem kompakter Direktanbau eines der Getriebe 7, 8, 9, 10 ausführbar und somit Adapter und dergleichen einsparbar. Da Einsteckritzel und Aufsteckritzel innerhalb des erfindungsgemäßen Baukastens der Baureihe vorgesehen sind, ist ein weiter Bereich von Übersetzungszahlen schon in der eintriebsseitig angeordneten Stirnradstufe erzielbar, wobei das genannte Ritzel eintreibendes Verzahnungsteil dieser Stirnradstufe ist.

Der Synchronmotor 122 ist mit Quadratflansch ausgeführt und ist somit an entsprechende Komponenten, die eine passende Schnittstelle aufweisen, verbindbar. Insbesondere sind der Adapter 126 oder das Vorschaltgetriebe 125 motorseitig mit einer solchen Schnittstelle ausführbar. Bei direktem Verbinden mit dem Getriebe ist auch das Getriebe 127, 128, 129 oder 130 mit einem solchen Flansch ausführbar. In der Figur 10 sind die Getriebe 127, 128, 129 und 130, der Adapter 126 und das Vorschaltgetriebe 125 jedoch mit einem Rundflansch ausgeführt. An die genannten Rundflansche sind nicht nur der Asynchronmotor 121 sondern auch der als Servomotor ausgeführte Asynchronmotor 123 oder der Umrichtermotor 124 verbindbar.

Das Vorschaltgetriebe 125 umfasst ein zwei- oder dreistufiges Stirnradgetriebe und ist für Anwendungen mit sehr hoher Untersetzung vorteilig eingesetzt.

Der Adapter 126 ist abtriebsseitig mit dem Getriebe 127, 128, 129 oder 130 verbindbar. Somit bleibt der Ölraum des Getriebes 127, 128, 129 oder 130 beim Tauschen des am Adapter 126 antriebsseitig angeordneten Motors 121, 122, 123, 124 vorteiligerweise geschlossen.

In weiteren Ausführungsbeispielen sind das Vorschaltgetriebe 125 und der Adapter 126 auch mit einem eintriebsseitigen Quadratflansch vorgesehen.

Das Flachgetriebe 128 und das Stirnradgetriebe 127 umfassen jeweils zwei oder drei Stirnradstufen. Das Kegelradgetriebe 129 umfasst eine eintriebsseitig angeordnete Stirnradstufe und eine abtriebsseitig angeordnete Kegelgetriebestufe. Das Schneckengetriebe 130 umfasst eine eintriebsseitig angeordnete Stirnradstufe und eine abtriebsseitig angeordnete Schneckengetriebestufe. Das Spiroplangetriebe 131 umfasst eine Spiroplangetriebestufe, also eine Winkelgetriebestufe.

Wesentlicher Vorteil des vorliegenden Baukastens ist, dass ein eintriebsseitig querkraftfreies Getriebe, beispielsweise nämlich das Planetengetriebe 8, 9, 10, mit einem Motor ebenso verbindbar ist wie ein eintriebsseitig nicht-querkraftfreies Getriebe, beispielsweise nämlich ein Getriebe mit einer eintriebsseitig angeordneten Stirnradstufe wie das Getriebe 7.
Die getriebeseitige Schnittstelle vom Motor oder vom Motor plus Adapter ist also gleich für querkraftfreie Getriebe und nicht-querkraftfreies Getriebe.

Weiterer wesentlicher Vorteil ist, dass die Massenträgheit auswählbar ist und somit an die Kundenapplikation, also die angetriebene Last anpassbar ist. Wenn also eine hohe Massenträgheit gewünscht ist und sogar eine niedrige Verdrehsteifigkeit wird ein Getriebemotor mit Adapter gewählt, beispielsweise die Komponenten 1, 2, 13, 11, 6, 8 oder die Komponenten 1, 2, 13, 11, 5, 7 aus Figur 1. Eine niedrige Verdrehsteifigkeit bedeutet auch einen sozusagen 'weicheren' Antrieb; es werden also Drehmomentstöße vom Getriebemotor in gewissem Umfang aufgenommen. Wird hingegen eine niedrige Massenträgheit und eine hohe Verdrehsteifigkeit nötig, wird ein Getriebemotor ohne Adapter, also mit ans Getriebe direkt verbundenem Motor, gewählt, beispielsweise die Komponenten 1, 3, 12, 7 oder die Komponenten 1, 3, 12, 8 oder die Komponenten 1, 4, 12, 9 aus Figur 1.

Die Getriebe, insbesondere die Getriebe 7, 8, 9, 10, sind spielarm ausgeführt, nämlich mit einem Spiel von weniger als 3 Winkelminuten pro Getriebestufe.

Die motorseitige Schnittstelle des Adapterflansches 11 ist mit sehr wenig Toleranz, also hochgenau ausgeführt. Somit ist der Motor mit seinem Motorlagerschild 13 sehr genau abbaubar. Insbesondere ist die genannte Schnittstelle mit weniger Toleranz, also genauer, ausgeführt als die Schnittstelle des Adapters zum Getriebe hin.

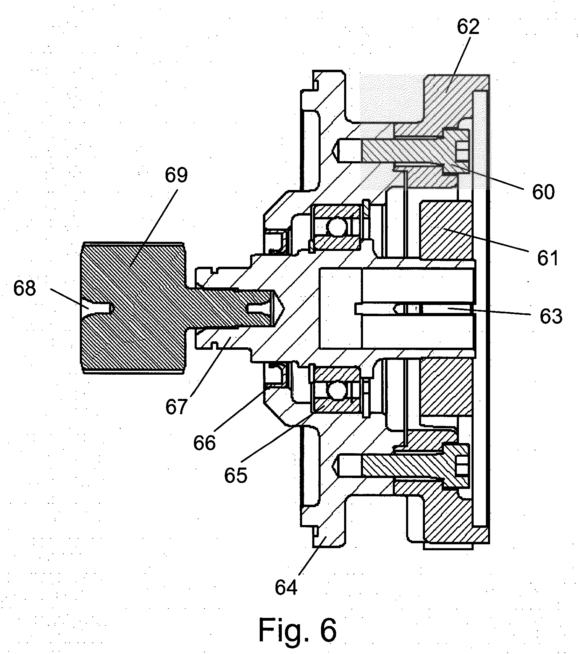

In der Figur 5 ist der das Adapterteil 5 und den Adapterflansch 11 umfassende Adapter in Schnittdarstellung gezeigt. In Figur 6 ist der das Adapterteil 6 und den Adapterflansch 11 umfassende Adapter in Schnittdarstellung gezeigt. Gemeinsam - und somit innerhalb des Baukastens wiederverwendbar - ist der Adapterflansch 62, der mittels der Verbindungsschrauben 60 mit dem Gehäuse des Adapterteils 5 oder 6 verbunden.

In Figur 5 ist das zylindrische Wellenende der Rotorwelle 2 mittels des Spannrings 61 mit der motorseitigen Kupplungshälfte 58 verbindbar, die hierzu einen Schlitz aufweist, der die Klemmwirkung des Spannrings 61 vorhersehbar und definierbar macht. Die getriebeseitige Adapterwelle 52 des Adapters weist eine Zentrierbohrung 51 auf und ist mit einem Aufsteckritzel 53 verbunden. Die Adapterwelle 52 ist mittels des Wellendichtrings 54 gegen das Gehäuse 56 des Adapterteils 5 abgedichtet und mittels der Lager 55, 57 in diesem gelagert, wobei das Lager 57 abgedichtet ausgeführt ist und somit eine gewisse Abdichtung des Schmierstoffes, insbesondere Fett oder Fließfett, zum Motor hin erreicht ist. Zum Getriebe hin, insbesondere zu dessen Innenraum mit einem unterschiedlichen Schmierstoff, wie Öl oder dergleichen, ist die Abdichtung mittels des Wellendichtringes 54 erreicht. Zwischen Wellendichtring 54 und Lager 55 ist ein Ringraum mit Schmierstoff, insbesondere Fett oder Fließfett, teilweise befüllt und somit ein Vorratsvolumen für Schmierstoff vorhanden.

Die getriebeseitige Kupplungshälfte 50 ist mit der Adapterwelle 52 verbunden, insbesondere form-, kraft- und /oder stoffschlüssig. Der Metallbalg ist an seinen axialen Endbereichen jeweils mit der getriebeseitigen Kupplungshälfte 50 und der motorseitigen Kupplungshälfte 58 verschweißt. Er überträgt somit das gesamte Drehmoment. Der Einsatz des diesen Metallbalg 59 umfassenden Adapters stellt also einen Getriebemotor mit niedriger Verdrehsteifigkeit zur Verfügung. Wegen der großen Masse der drehenden Teile, insbesondere auch des Adapters, weist dann dieser Getriebemotor auch ein hohes Trägheitsmoment oder Massenträgheit auf. Die Schnittstelle des Adapters zum Getriebe hin ist als sogenannter offener Einpass ausgeführt und lässt daher kleine relative, radiale Verschiebungen zu. Somit wird bei Einfügen des Aufsteckritzels 53 in das Getriebe 7 das Aufsteckritzel 53 selbst und die Adapterwelle 52 sowie auch das Gehäuse 56 des Adapterteils 5 in derjenigen Lage und Ausrichtung fixiert, die im Wesentlichen durch die Position der Verzahnungsteile des Getriebes 7 vorgegeben ist. Deshalb ist das Getriebe bei der Fertigung schon einstellbar und das Anschließen des Adapters stört die Einstellungen des Getriebes nicht. Kleine fertigungsbedingte Abweichungen werden also durch Verschieben oder Verdrehen der Adapterwelle 52 im Raum ausgeglichen. Wesentlich ist dabei auch, dass die Einstellung des Achsabstandes und somit auch des Spiels der eintreibenden Stirnradstufe des Getriebes 7 einstellbar ist mittels radialem Verschieben des Gehäuses 56 gegen das Gehäuse des Getriebes 7. Die genannten Verschiebungen liegen in der Größenordnung von einem oder mehreren Zehnteln. Das Spiel ist hierbei derart einstellbar, dass es geringer ist als 3 Winkelminuten.

Der Adapterflansch 62 hingegen weist zum Motor hin eine derartige Schnittstelle auf, dass der Motor samt Rotorwelle 2 beim Anschrauben an den Adapterflansch 62 genau positioniert wird, d.h., dass die räumliche Lage und Ausrichtung von Motorlagerschild 13 mit Motorgehäuse 1 und Rotorwelle 2 mittels des Anschraubens fest gelegt ist. Dazu ist der Adapterflansch 62 an seiner Schnittstelle mit einem Einpass versehen und das Motorlagerschild 13 mit einer entsprechenden Ausformung. Radiale und Axiale Abweichungen von der Idealposition nimmt der Metallbalg 59 auf
Der Motor weist Komponenten aus unterschiedlichen Materialien auf. Beispielsweise ist der Stator, insbesondere also auch das Motorgehäuse 1, aus Aluminium ausgeführt, der Rotor, insbesondere die Rotorwelle, aus Stahl. Somit ergeben sich verschiedene thermische Ausdehnungen, die sich auch in Richtung auf den Adapter hin auswirken. Zur Kompensation dieser Ausdehnungen weisen die motorseitige Kupplungshälfte 58 und die getriebeseitige Kupplungshälfte 50 einen etwa einen oder mehrere Millimeter großen axialen Abstand zueinander auf. Bei thermisch bedingten Längenausdehnungen der Rotorwelle wird also eine Kompensation mittels des Metallbalgs 59 ermöglicht.

In Figur 6 ist das zylindrische Wellenende der Rotorwelle 2 mittels des Spannrings 61 mit der Adapterwelle 67 verbindbar, die hierzu einen Schlitz 63 aufweist, der die Klemmwirkung des Spannrings 61 vorhersehbar und definierbar macht. Außerdem ist die Adapterwelle 67 im Bereich des motorseitigen Schlitzes 63 als Hohlwelle zum Einstecken der Rotorwelle ausgeführt. Die Adapterwelle 67 des Adapters ist mit einem Einsteckritzel 69 verbunden, das eine Zentrierbohrung 68 aufweist. Die Adapterwelle 67 ist mittels des Wellendichtrings 66 gegen das Gehäuse 64 des Adapterteils 6 abgedichtet und mittels des Lagers 65 in diesem gelagert. Das Lager 65 ist zum Motor hin abgedichtet ausgeführt. Zwischen Wellendichtring 66 und Lager 65 ist ein Ringraum mit Schmierstoff, insbesondere Fett oder Fließfett, teilweise befüllt und somit ein Vorratsvolumen für Schmierstoff vorhanden.

Der Adapter nach Figur 6 stellt somit einen Getriebemotor mit hoher Verdrehsteifigkeit zur Verfügung. Wegen der geringeren Masse der drehenden Teile, insbesondere auch des Adapters, im Vergleich zu dem Adapter nach Figur 5 weist dann dieser Getriebemotor auch ein niedriges Trägheitsmoment oder Massenträgheit auf. Die Schnittstelle des Adapters zum Getriebe hin ist als sogenannter offener Einpass ausgeführt und lässt daher kleine relative, radiale Verschiebungen zu. Somit wird bei Einfügen des Aufsteckritzels 69 in das Getriebe 8, 9 oder 10 das Einsteckritzel 69 selbst und die Adapterwelle 67 sowie auch das Gehäuse 64 des Adapterteils 6 in derjenigen Lage und Ausrichtung fixiert, die im Wesentlichen durch die Position der Verzahnungsteile des Getriebes 8, 9 oder 10 vorgegeben ist, insbesondere durch die Planeten der eintreibenden Planetengetriebestufe des Getriebes 8, 9 oder 10. Deshalb ist das Getriebe bei der Fertigung schon einstellbar und das Anschließen des Adapters stört die Einstellungen des Getriebes nicht. Kleine fertigungsbedingte Abweichungen werden also durch Verschieben oder Verdrehen der Adapterwelle 67 im Raum ausgeglichen. Insbesondere wegen der Verwendung des Aufsteckritzels 69 als Sonnenrad der eintreibenden Stufe der Getriebe 8, 9 oder 10 ist das Raumvolumen für Bewegen des Einsteckritzels 69 beim Einstecken in das Getriebe 8, 9 oder 10 stark eingeschränkt. Der offene Einpass lässt aber zu, dass die exakte endgültige relative Lage der Gehäuse des Adapterteils 6 und des Gehäuses des Getriebes 8, 9 oder 10 zueinander sich an die durch die von den Planeten vorgegebene Lage des Sonnenrades anpasst.

Der Adapterflansch 62 hingegen weist zum Motor hin eine derartige Schnittstelle auf, dass der Motor samt Rotorwelle 2 beim Anschrauben an den Adapterflansch 62 genau positioniert wird, d.h., dass die räumliche Lage und Ausrichtung von Motorlagerschild 13 mit Motorgehäuse 1 und Rotorwelle 2 mittels des Anschraubens fest gelegt ist. Dazu ist der Adapterflansch 62 an seiner Schnittstelle mit einem Einpass versehen und das Motorlagerschild 13 mit einer entsprechenden Ausformung.

Zur Kompensation thermischer Ausdehnungen sind Ausgleichsscheiben als elastische Ringe im Bereich des Lagers 65 eingebracht. Somit werden thermische Ausdehnungen im Wesentlichen an das Einsteckritzel 69 weitergegeben und im Getriebe 8, 9 oder 10 kompensiert, da Sonnenrad und Planeten gegeneinander um kleine Beträge verschiebbar sind ohne wesentliche Funktionsverluste. Das Getriebe 8, 9 oder 10 stellt hierzu Raumvolumen zur Verfügung, das axial vor der oberen und hinter der unteren Stirnfläche des Sonnenrades vorgesehen ist, wie auch den Figuren 12 und 13 zu entnehmen ist.

Wesentlicher Unterschied zwischen den Adaptern nach Figur 5 und 6 ist, dass der Adapter nach Figur 5 zwei Lager 54, 57 für die Adapterwelle 52 aufweist, für die Adapterwelle 67 hingegen nur ein Lager 65 vorgesehen ist. Das Lager 65 ist wesentlich als Fixierhilfe beim Montieren vorgesehen. Da das Einsteckritzel 69 als Sonnenrad verwendet wird, ist keine Querkraftaufnahme nötig. Der Adapter nach Figur 5 ist aber zum Zusammenbau mit der eintreibenden Stirnradstufe des Getriebes 7 vorgesehen, wobei dann Querkräfte auf das Aufsteckritzel 53 wirken, die von den Lagern 55, 57 aufgenommen werden.

In Figur 7 ist das Getriebe 7 gezeigt, also das Winkelgetriebe, welches zum Motor hin dieselbe Schnittstelle mit offenem Einpass aufweist wie das Planetengetriebe. Somit ist also der Motor mit seinem Motorlagerschild 12 sowohl verbindbar mit dem Winkelgetriebe 7 als auch mit einem der Planetengetriebe 8, 9, 10. In Figur 7 ist die Schnittstelle mit offenem Einpass 74 genauer gezeigt. Das mit der Adapterwelle verbundene Ritzel wird in das Winkelgetriebe 7 soweit eingeschoben bis es im Eingriff steht mit dem Stirnrad 70 und die Gehäuse des Adapterteils oder des Motorlagerschildes 12 axial auf das Gehäuse des Getriebes 7 auftreffen. Weiter wird dann eine relative radiale Verschiebung der Gehäuse derart vorgenommen, dass die gewünschte Größe des Spiel der Stirnradstufe von weniger als 3 Winkelminuten erreicht ist. Zuletzt wird dann die Verbindung mit Verbindungsschrauben dauerfest befestigt.

Vorteil dabei ist, dass nicht nur der Adapter mit Adapterteil 5 sondern auch ein Direktanbau des Motors mittels des Motorlagerschildes 12 ermöglicht ist, wobei dann das Einsteckritzel oder Aufsteckritzel direkt an der Rotorwelle des Rotors 3 oder 4 vorgesehen ist. Somit ist eine überaus kompakte Bauform erreicht, die gleichzeitig kompatibel ist mit dem Standardmotor, umfassend die Rotorwelle 2 mit zylindrischem Wellenende, über den Adapter. Das Stirnrad 70 steht nach dem Verbinden des Adapters oder Motors mit dem jeweiligen Ritzel im Eingriff, wobei ein Spiel von weniger als drei Winkelminuten vorgesehen ist. Das Stirnrad 70 ist mittels Passfeder mit der Welle 76 verbunden, die auch das Ritzel 72 umfasst. Insbesondere ist die Welle 76 und das Ritzel 72 einstückig ausgeführt. Die Welle 76 ist mittels der Lager 71 gehalten, das mit dem Gehäuseteil 75 des Getriebes 7 verbunden ist. Das Ritzel 72 steht im Eingriff mit dem planverzahntes Rad 73, das mittels eines nicht gezeigten Lagers im Gehäuseteil 75 des Getriebes 7 gelagert ist.

In der Figur 8 ist das Planetengetriebe 8 als Einzelteil vergrößert gezeigt. Die Schnittstelle zum Motor oder Adapter hin ist wieder als offener Einpass in der schon erwähnten Weise ausgeführt. Das mit der Rotorwelle oder Adapterwelle verbundene Ritzel, also Einsteckritzel oder Aufsteckritzel, wirkt nach dem Verbinden als Sonnenrad des Planetengetriebes. Thermische Ausdehnungen sind mit dem Raumvolumen 88 kompensierbar. Vorteiligerweise weist das Raumvolumen eine axiale Ausdehnung zum Sonnenrad hin zwischen 0.2 mm und 2 mm auf. Das Sonnenrad steht im Eingriff mit den Planetenrädern 86 und wird beim Verbinden in seiner Lage und Ausrichtung wesentlich mitbestimmt. Die Planetenräder 86 sind über jeweils ein oder sogar zwei axial hintereinander angeordnete Nadellager 85 an den Planetenachsen 87 gelagert, die in Bohrungen der Planetenträgerwelle 81 vorgesehen sind, die eine Zentrierbohrung 80 aufweist. Die Planetenträgerwelle 81 ist mittels der Lager 83, 84 im Gehäuse gelagert und mittels des Wellendichtring 82 gegen dieses abgedichtet. Die Spannmutter 89 dient an ihrem äußeren Umfang als Lauffläche für die Dichtlippe des Wellendichtrings. Das Gehäuse weist auch eine Ausnehmung mit Verschlussschraube zum Befüllen oder Entleeren des Schmierstoffes auf.

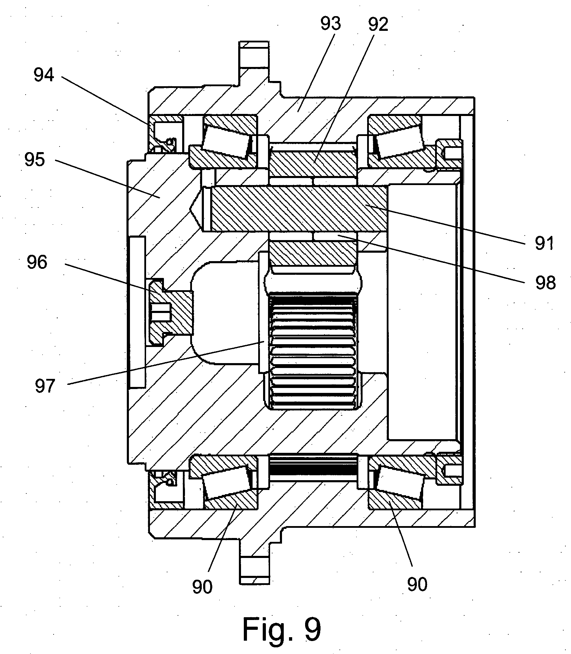

In der Figur 9 ist das Planetengetriebe 9 als Einzelteil vergrößert gezeigt, wobei dieses Planetengetriebe abtriebsseitig eine Flanschblock-Schnittstelle aufweist. In weiteren Ausführungsbeispielen ist diese Schnittstelle gemäß der Norm EN ISO 9409-1 als Industrieroboter-Schnittstelle ausgeführt. Die Schnittstelle zum Motor oder Adapter hin ist wieder als offener Einpass in der schon erwähnten Weise ausgeführt. Das mit der Rotorwelle oder Adapterwelle verbundene Ritzel, also Einsteckritzel oder Aufsteckritzel, wirkt nach dem Verbinden als Sonnenrad des Planetengetriebes. Thermische Ausdehnungen sind mit dem Raumvolumen 97 kompensierbar. Vorteiligerweise weist das Raumvolumen eine axiale Ausdehnung zum Sonnenrad hin zwischen 0.2 mm und 2 mm auf. Das Sonnenrad steht im Eingriff mit den Planetenrädern 92 und wird beim Verbinden in seiner Lage und Ausrichtung wesentlich mitbestimmt. Die Planetenräder 92 sind über jeweils ein oder sogar zwei axial hintereinander angeordnete Nadellager 98 an den Planetenachsen 91 gelagert, die in Bohrungen der Planetenträgerwelle 95 vorgesehen sind, der eine zentrale Bohrung aufweist, die mittels einer Verschlussschraube 96 dicht verschlossen ist. In weiteren Ausführungsbeispielen ist die genannte Bohrung als Gewindebohrung ausgeführt und die Verschlussschraube 96 weist ein entsprechendes Gewinde auf. In Figur 9 ist die Verschlussschraube 96 zum Befüllen oder Entleeren des Schmierstoffes lösbar und dann wieder verbindbar. Die Planetenträgerwelle 95 ist mittels der Lager 90 im Gehäuse gelagert und mittels des Wellendichtring 94 gegen dieses abgedichtet, wobei der Planetenträger 95 an seinem äußeren Umfang in einem Bereich derart bearbeitet ist, dass er als Lauffläche für die Dichtlippe des Wellendichtrings verwendbar ist.

In Figur 11 ist der Zusammenbau des Winkelgetriebes 7 mit dem Adapterteil 5 und Adapterflansch 11 gezeigt, wobei die Schnittstelle 74 als offener Einpass ausgeführt ist zum Einstellen des Spieles zwischen Stirnrad 70 und Aufsteckritzel 53.

In Figur 12 ist der Zusammenbau des Planetengetriebes 8 mit dem Adapterteil 6 und Adapterflansch 11 gezeigt, wobei die Schnittstelle 74 als offener Einpass ausgeführt ist zum Ausgleich von Toleranzen. Dabei bestimmen die Planetenräder 86 die Lage und Ausrichtung des als Sonnenrad eingesetzten Einsteckritzels 69 wesentlich mit, insbesondere in radialer Ausrichtung.

In Figur 13 ist der Zusammenbau des Planetengetriebes 9 mit dem Adapterteil 6 und Adapterflansch 11 gezeigt, wobei die Schnittstelle 74 als offener Einpass ausgeführt ist zum Ausgleich von Toleranzen. Dabei bestimmen die Planetenräder 92 die Lage und Ausrichtung des als Sonnenrad eingesetzten Einsteckritzels 69 wesentlich mit, insbesondere in radialer Ausrichtung.

Die Erfindung ermöglicht also ein Verbinden von IEC-Normmotoren mittels Adapter oder herstellereigenen Motoren ohne Adapter mit einem Getriebe, wobei die herstellereigenen Motoren mit einer ein Ein- oder Aufsteckritzel umfassenden Rotorwelle ausgeführt sind. Somit ist also ein extrem kompakter Direktanbau ermöglicht an ein Getriebe, das aber auch verwendbar ist mit über Adapter verbindbaren Normmotoren.

Weiter vorteilhaft ist bei der Erfindung, dass die Adapter die thermische Längenausdehnung der Rotorwelle kompensieren und somit das Getriebe und der Motor mittels der Adapter thermisch entkoppelbar sind.

Weiter ist wesentlich, dass sowohl ein- oder mehrstufige Getriebe mit oder ohne eintriebsseitig abgegebener Querkraft, also Getriebe mit eintreibender Stirnradgetriebestufe oder Planetengetriebestufe verbindbar sind. Der Adapter ist je nach Art des Getriebes mit Querkraftkompensation, also mit Adapterteil 5, oder ohne Querkraftkompensation, also mit Adapterteil 6, ausführbar. Somit ergibt sich eine große Anzahl von Variationsmöglichkeiten.

Der Adapter hat darüber hinaus noch die Zusatzfunktion, die Zentrierung des Ritzels beim Einbauen in das Getriebe zu ermöglichen.

Bei dem offenen Einpass ist wesentlich, dass vor dem Festziehen der Verbindungsschrauben radiale Verschiebungen zwischen Adapter und Getriebe zugelassen sind, die größer sind als entsprechende Verschiebungen zwischen Adapter und Motor.

Bei weiteren erfindungsgemäßen Ausführungsbeispielen hat nicht nur das gesamte Winkelgetriebe ein Spiel von weniger als 3 Winkelminuten sondern auch das Planetengetriebe und auch das zweistufige Planetengetriebe, welches aus der Planetengetriebevorstufe 10 und dem Planetengetriebe 9 oder 8 gebildet ist.

Der Motor mit Rotor 2 kann also ebenso als Direktanbaumotor (1,2,13) ausgeführt werden als auch einem anderen Motorlagerschild 14, das dann die Verbindung mit den Getrieben 127, 128, 129, 130, 131 der Figur 10 ermöglicht, wobei das Motorlagerschild 14 mit dem Adapter 126 oder mit dem Vorschaltgetriebe 125 verbindbar ist. In den Figuren 1 und 10 ist zur grafischen Darstellung dieser Verbindungsmöglichkeit eine umkreiste 1 verwendet.

Das Bezugszeichen der umkreisten 2 stellt dar, dass auch ein Direktanbau des Motorgehäuses 1 zusammen mit den Rotoren 3 oder 4 an die Getriebe 127, 128, 129, 130, 131 ermöglicht ist. Dazu ist also das Motorgehäuse 1 mit einer Schnittstelle versehen, die der Schnittstelle der genannten Getriebe entspricht.

Somit sind nicht nur die Standard-Getriebe 127, 128, 129, 130, 131 für das Motorgehäuse verwendbar sondern auch die Servogetriebe 7,8,9.

Gesamtvorteil ist für die Erfindung unter anderem, dass die Anzahl der Teile in der Getriebemotoren möglichst klein ist, die Wiederverwendung möglichst groß innerhalb des Baukastens und die abgedeckten Anwendungsvarianten möglichst vielfältig. Insbesondere sind als Varianten sowohl Servo- als auch Standard-Getriebemotoren aufgezeigt.

Die Baureihe ist derart ausgelegt und ausgeführt, dass alle Servogetriebe der Figur 1 nur ganzzahlige Übersetzungen haben.

Bei den Varianten nach Figur 12 und Figur 13 ist derselbe Adapter eingesetzt. Jedoch ist das Planetengetriebe nach Figur 13 beidseitig, das Planetengetriebe nach Figur 12 einseitig, nämlich abtriebsseitig, gelagert. Daher benötigt das adapterseitige Lager 90 axiale Baulänge. Diese Baulänge wird mittels der Ausführung und axialen Baulänge der Adapterwelle 67 zusammen mit dem Einsteckritzel 69 derart berücksichtigt, dass das Einsteckritzel als Sonnenrad vollständig zwischen die Planetenräder 92 eingesetzt ist. Bei der Figur 12 ist derselbe Adapter vorgesehen. Damit auch in diesem Planetengetriebe das Einsteckritzel 69 wieder vollständig zwischen die Planetenräder 92 eingesetzt ist, ist das Gehäuse 801 des Planetengetriebes derart verlängert, dass die Schnittstelle 74, also der offene Einpass, wiederum an entsprechender axialer Position relativ zu den Planetenrädern sitzt wie auch in Figur 13. Dadurch ist in Figur 12 zwischen der Planetenträgerwelle 81 und dem offenen Einpass ein vergrößertes Luftvolumen gebildet, welches zur Luftdruckverminderung bei Temperaturerhöhung beiträgt. Diese Luftdruckverminderung ist insbesondere bei Montage oder bei Temperaturerhöhungen während des Betriebes vorteilig. Insgesamt wird also wegen dem gesetzten Ziel der möglichst großen Kombinatorik eine vergrößerte Baulänge bei einer Variante der Baureihe in Kauf genommen. Überraschenderweise ist jedoch insgesamt ein Vorteil erzielbar, nämlich die Luftdruckverminderung bei Temperaturerhöhung relativ gesehen zu einem kleineren Bauvolumen des Getriebes. Dieser Vorteil ist insbesondere bei Servogetrieben entscheidend, da dort während einer Positionieraufgabe hohe Drehzahlen auftreten können, die zu entsprechenden Erwärmungen führen können. Deshalb wird bei der vorliegenden Baureihe die genannte Baulängenerhöhung überraschenderweise bewusst in Kauf genommen, um somit zwei Vorteile zu erzielen, erstens nämlich die Kombinatorische Vielfalt und zweitens die Luftdruckverminderung.

In Figur 12 ist im Vergleich zu Figur 13 das vergrößerte Luftvolumen deutlich zu sehen. Wenn nun statt des Adapters ein Motor mit A-Lagerschild direkt angebaut wird, ist ebenfalls das Luftvolumen in analoger Weise gebildet.

Bei weiteren erfindungsgemäßen Ausführungsbeispielen ist statt des zweistufigen Winkelgetriebes 7 ein einstufiges Hypoid-Getriebe vorgesehen. Vorteilig ist dabei, dass die Übersetzungszahl ganzzahlig ist, wenn auch der Wirkungsgrad geringfügig kleiner ist.

Bei dem genannten Direktanbau ist insbesondere vorteilig, dass keine Kupplung benötigt wird und daher die Anzahl der Teile und somit auch die Kosten verringert sind. Außerdem ist die Bauform daher auch kompakt.

Die Kompensation der thermischen Ausdehnungen erfolgt bei Figur 5 mittels der Verformung des Metallbalges, bei der Figur 6 mittels der verschieblichen Lager 65.

Das Winkelgetriebe 7 ist stets derart ausgeführt, dass es insgesamt ein ganzzahlige Übersetzungszahl aufweist vorteiligerweise im Bereich von 3 bis 30. Zur Erreichung der verschiedenen Übersetzungszahlen werden die Verzahnungsteile innerhalb einer Baugröße ausgetauscht; dabei wird je nach gewünschter Übersetzungszahl ein Satz, umfassend planverzahntes Rad und Hypoid-Ritzel, gegen einen zweiten Satz, umfassend ein anderes planverzahntes Rad und ein anderes Hypoid-Ritzel, ausgetauscht. Außerdem werden die Stirnräder der eintreibenden Getriebestufe derart variiert, dass insgesamt immer eine ganzzahlige Übersetzung vorliegt. Das Variieren der Stirnräder umfasst bei konstantem Achsabstand, also innerhalb einer jeweiligen Baugröße, den Schrägungswinkel und die Profilverschiebung.

Für die Hypoidstufe des Winkelgetriebes 7 ist der erste genannte Satz vorteiligerweise auf die Übersetzungszahl i=3 ausgelegt, der zweite Satz auf die Übersetzungszahl i= 7.5 .

Die besonderes vorteilig erzeugten Übersetzungszahlen innerhalb einer Baugröße, die mit möglichst wenig verschiedenen Verzahnungsteilen einen möglichst weiten und dicht besetzten Bereich von Übersetzungszahlen abdecken, sind i = 3, 4, 6, 8, 10, 15, 20, 25, 30, 35 und 40. Dabei sind die Übersetzungszahlen von i = 3 bis 10 mittels des Hypoid-Satzes mit i= 3 erzeugt und die restlichen Übersetzungszahlen mit dem Satz mit i= 7.5.

Eine vorteilhaft gestaltete Baureihe umfasst 6 Baugrößen, also 6 verschiedene Achsabstände bei der Stirnradstufe des Winkelgetriebes 7. Mit dieser Anzahl werden alle industriell üblichen Baugrößen oder Leistungsklassen abgedeckt. Außerdem ist dabei ein optimales Verhältnis zwischen Teilevielfalt und Stückzahl erreichbar. Bei noch größeren Baugrößen, beispielsweise im Megawattbereich oder mehr, sind die Stückzahlen derart gering, dass der Vorteil der mehrfachen Verwendung von Teilen bei verschiedenen Varianten gering wird, aber die konzeptionelle Nachteile zunehmen, wie beispielsweise die Materialmengen und somit auch die Materialkosten für das Gehäuse.

### Bezugszeichenliste

1 Motorgehäuse
2 Rotor mit zylindrischem Wellenende
3 Rotor mit Passfeder für Aufsteckritzel
4 Rotor für Einsteckritzel
5 Adapterteil mit zwei Lagern
6 Adapterteil mit ein Lager
7 Winkelgetriebe
8 Planetengetriebe mit zylindrischem Abtriebswellenende
9 Planetengetriebe mit Flanschblockabtrieb
10 Planetengetriebevorstufe
11 Adapterflansch
12 Motorlagerschild mit Lager
13 Motorlagerschild mit Lager
14 Motorlagerschild mit Lager
21 Zentrierbohrung
22 Rotorwelle
23 Motorlagerschild
24 Schnittstelle
25 Lager
26 Wellendichtring
31 Aufsteckritzel
32 Rotorwelle
33 Motorlagerschild
35 Lager
36 Wellendichtring
41 Einsteckritzel
42 Rotorwelle
45 Lager
46 Wellendichtring
50 getriebeseitige Kupplungshälfte
51 Zentrierbohrung
52 Adapterwelle
53 Aufsteckritzel
54 Wellendichtring
55 Lager
56 Gehäuse des Adapterteils
57 Lager
58 motorseitige Kupplungshälfte
59 Metallbalg
60 Verbindungsschraube
61 Spannring
62 Adapterflansch
63 Schlitz
64 Gehäuse des Adapterteils
65 Lager
66 Wellendichtring
67 Adapterwelle
68 Zentrierbohrung
69 Einsteckritzel
70 Stirnrad
71 Lager
72 Ritzel
73 Planverzahntes Rad
74 offener Einpass
75 Gehäuseteil
76 Welle
80 Zentrierbohrung
81 Planetenträgerwelle
82 Wellendichtring
83 Lager
84 Lager
85 Nadellager
86 Planetenrad
87 Planetenachse
88 Raumvolumen
89 Spannmutter
90 Lager
91 Planetenachse
92 Planetenrad
93 Gehäuse
94 Wellendichtring
95 Planetenträger
96 Verschlussschraube
97 Raumvolumen
98 Nadellager
121 Asynchronmotor
122 Synchronmotor mit Quadratflansch
123 Asynchronmotor als Servomotor
124 Umrichtermotor
125 Vorschaltgetriebe
126 Adapter
127 Stirnradgetriebe
128 Flachgetriebe
129 Kegelradgetriebe
130 Schneckengetriebe
131 Spiroplangetriebe

## Patentansprüche

1. **Getriebemotor, umfassend ein von einem Elektromotor angetriebenes Getriebe,**
wobei **der Elektromotor** jeweils zumindest ein Motorgehäuse (1), einen Rotor (2), umfassend Rotorwelle (22), und ein **A-seitiges Motorlagerschild (12)** umfasst,
**wobei** das Motorgehäuse (1) des Motors eine Schnittstelle (24) zum abtriebsseitigen Motorlagerschild (12) aufweist, **an welcher das** abtriebsseitige Motorlagerschild (12) mit dem Motorgehäuse (1) **verbunden ist,**
wobei das A-seitige Motorlagerschild (12) abtriebsseitig eine Schnittstelle (24) derart aufweist, dass das A-seitige Motorlagerschild (12) mit einem Adapterflansch (11) eines Adapters **verbunden** ist,
wobei der Adapter ein erstes Adapterteil (5) und den Adapterflansch (11) umfasst,
**wobei das erste Adapterteil (5) mit dem Adapterflansch (11) verbunden ist,** wobei die Schnittstelle (24) zwischen Adapterflansch (11) und A-seitigem Motorlagerschild (12) **ein** Mittel zum Zentrieren, **also** Einpass, umfasst,
wobei das erste Adapterteil (5)
- mit einem querkraftfreien Getriebe, wie Planetengetriebe (8), mittels einer **am Getriebe eintriebsseitig als Einpass (74) ausgeführten** Schnittstelle (24) **verbunden** ist,
- eine Adapterwelle (52) umfasst,
- Mittel zur Kompensation axialer Ausdehnungen, insbesondere thermisch bedingter Ausdehnungen, aufweist und
- ein Lager (25) umfasst,
**dadurch gekennzeichnet, dass**
**der am Getriebe eintriebsseitig angeordnete Einpass (74) derart ausgeführt ist, dass vor dem Festziehen der Verbindungsschrauben radiale Verschiebungen zwischen Adapter und Getriebe zugelassen sind, die größer sind als entsprechende Verschiebungen zwischen Adapter und Motor**
**und dass der Motor samt Rotorwelle (2) beim Anschrauben genau positioniert wird, also dass die räumliche Lage und Ausrichtung von Motorlagerschild mit Motorgehäuse und Motorwelle (2) mittels des Anschraubens festgelegt ist, wobei die motorseitige, also** zwischen Adapterflansch (11) und A-seitigem Motorlagerschild (12) angeordnete **Schnittstelle, also der Einpass des Adapterflansches, mit sehr wenig Toleranz, also hochgenau ausgeführt ist,**
**wobei das abtriebsseitige Motorlagerschild (12) ein Lager (25) für die Rotorwelle (22) umfasst,**
**wobei** als erste Mittel zur Kompensation axialer Ausdehnungen eine Balgkupplung vorgesehen ist,
**wobei die Balgkupplung eine motorseitige Kupplungshälfte (50) aufweist und eine getriebeseitige Kupplungshälfte (58),**
**wobei das zylindrische Wellenende der Rotorwelle (2) mittels des Spannrings (61) mit einer motorseitigen Kupplungshälfte (58) verbindbar, die hierzu einen Schlitz aufweist,**
**wobei die getriebeseitige Kupplungshälfte (50) in die Adapterwelle (52) eingesteckt ist, insbesondere mit der Adapterwelle (52) verbunden ist, insbesondere form-, kraft- und /oder stoffschlüssig,**
**wobei ein Metallbalg an seinen axialen Endbereichen jeweils mit der getriebeseitigen Kupplungshälfte (50) und der motorseitigen Kupplungshälfte (58) verschweißt ist.**

2. Getriebemotor nach Anspruch 1,
**dadurch gekennzeichnet, dass**
bei der Rotorwelle (22) abtriebsseitig ein Aufsteckritzel (53) vorgesehen ist.

3. Getriebemotor nach mindestens einem der vorangegangenen Ansprüche,
**dadurch gekennzeichnet, dass**
**das Getriebe derart spielarm ausgeführt ist,** insbesondere nach Spieleinstellung mittels der Verschiebungen, dass das Spiel kleiner ist als 6 **oder 3** Winkelminuten pro einzelne Getriebestufe und/oder Getriebe insgesamt.

4. Getriebemotor nach mindestens einem der vorangegangenen Ansprüche,
**dadurch gekennzeichnet, dass**
das Getriebe als eintreibende Stufe eine Planetengetriebestufe aufweist.

5. **Getriebemotor** nach mindestens einem der vorangegangenen Ansprüche,
**dadurch gekennzeichnet, dass**
die Schnittstelle (24) zwischen Motorlagerschild (12) und Adapterflansch (11) oder zwischen Adapterteil (5) und Getriebe jeweils als Quadratflansch oder als Rundflansch ausgebildet sind.

6. **Getriebemotor** nach mindestens einem der vorangegangenen Ansprüche,
**dadurch gekennzeichnet, dass**
**das** Getriebe abtriebsseitig ein zylindrisches Wellenende aufweist.

7. **Getriebemotor** nach mindestens einem der vorangegangenen Ansprüche,
**dadurch gekennzeichnet, dass**
**das** Getriebe abtriebsseitig eine Flanschblock-Schnittstelle gemäß Norm aufweist.

## Claims

1. A geared motor, comprising a gear unit driven by an electric motor,
wherein the electric motor comprises at least a motor housing (1), a rotor (2), comprising rotor shaft (22), and a drive-end motor bearing shield (12),
wherein the motor housing (1) of the motor has an interface (24) with the output-side motor bearing shield (12) at which the output-side motor bearing shield (12) is connected to the motor housing (1),
wherein the drive-end motor bearing shield (12) has on the output side an interface (24) such that the drive-end motor bearing shield (12) is connected to an adapter flange (11) of an adapter,
wherein the adapter comprises a first adapter part (5) and the adapter flange (11), wherein the first adapter part (5) is connected to the adapter flange (11), wherein the interface (24) between the adapter flange (11) and drive-end motor bearing shield (12) comprises a means for centring, i.e. a mounting,
wherein the first adapter part (5)
- is connected to a gear unit free from transverse force, such as planetary gear unit (8), by means of an interface (24) embodied on the gear unit on the input side as a mounting (74),
- comprises an adapter shaft (52),
- has means for compensation of axial expansions, in particular thermally caused expansions, and
- comprises a bearing (25),
**characterised in that**
the mounting (74) arranged on the gear unit on the input side is embodied such that prior to tightening the connecting screws radial displacements between the adapter and gear unit which are greater than corresponding displacements between the adapter and motor are permitted,
and **in that** the motor plus rotor shaft (2) upon screwing-on is positioned precisely, i.e. **in that** the spatial position and orientation of the motor bearing shield with the motor housing and motor shaft (2) is fixed by means of the screw-attachment, wherein the motor-side - i.e. arranged between the adapter flange (11) and drive-end motor bearing shield (12) - interface, i.e. the mounting of the adapter flange, is embodied with very low tolerance, i.e. with high precision,
wherein the output-side motor bearing shield (12) comprises a bearing (25) for the rotor shaft (22),
wherein a bellows coupling is provided as first means for compensation of axial expansions,
wherein the bellows coupling has a motor-side coupling half (50) and a gear-side coupling half (58),
wherein the cylindrical shaft end of the rotor shaft (2) [is] able to be connected by means of the clamping ring (61) to a motor-side coupling half (58), which to this end has a slot,
wherein the gear-side coupling half (50) is inserted into the adapter shaft (52), in particular is connected to the adapter shaft (52), in particular in positive manner, in non-positive manner and/or by a material-formed bond,
wherein a metal bellows is welded at its axial end regions in each case to the gear-side coupling half (50) and the motor-side coupling half (58).

2. A geared motor according to Claim 1,
**characterised in that**
in the case of the rotor shaft (22) a slip-on pinion (53) is provided on the output side.

3. A geared motor according to at least one of the preceding claims,
**characterised in that**
the gear unit is embodied with little play, in particular after setting the play by means of the displacements, such that the play is less than 6 or 3 minutes of angle per individual gear stage and/or gear unit in total.

4. A geared motor according to at least one of the preceding claims,
**characterised in that**
the gear unit has a planetary gear stage as input stage.

5. A geared motor according to at least one of the preceding claims,
**characterised in that**
the interface (24) between the motor bearing shield (12) and adapter flange (11) or between the adapter part (5) and gear unit are formed in each case as a square flange or as a round flange.

6. A geared motor according to at least one of the preceding claims,
**characterised in that**
the gear unit has a cylindrical shaft end on the output side.

7. A geared motor according to at least one of the preceding claims,
**characterised in that**
the gear unit has a flange block interface according to standard on the output side.

## Revendications

1. Motoréducteur, comprenant un réducteur entraîné par un moteur électrique,
le moteur électrique comprenant au moins un carter de moteur (1), un rotor (2) comprenant un arbre de rotor (22), et un flasque de moteur côté A (12),
le carter de moteur (1) du moteur présentant une interface (24) avec le flasque de moteur côté sortie (12), par laquelle le flasque de moteur côté sortie (12) est relié au carter de moteur (1),
le flasque de moteur côté A (12) présentant du côté sortie une interface (24) de telle sorte que le flasque de moteur côté A (12) est relié à une bride d'adaptateur (11) d'un adaptateur,
l'adaptateur comprenant une première partie d'adaptateur (5) et la bride d'adaptateur (11),
la première partie d'adaptateur (5) étant reliée à la bride d'adaptateur (11), l'interface (24) entre la bride d'adaptateur (11) et le flasque de moteur côté A (12) comprenant un moyen pour centrer, à savoir un raccord,
la première partie d'adaptateur (5)
- étant reliée à un réducteur sans force transversale, tel qu'un engrenage planétaire (8), au moyen d'une interface (24) qui est réalisée sous la forme d'un raccord (74) du côté entrée du réducteur,
- comprenant un arbre d'adaptateur (52),
- présentant des moyens pour compenser les dilatations axiales, en particulier les dilatations d'origine thermique, et
- comprenant un palier (25),
**caractérisé en ce que**
le raccord (74) disposé du côté entrée du réducteur est réalisé de telle sorte que, avant le serrage des vis de raccordement, des déplacements radiaux entre adaptateur et réducteur, qui sont plus grands que les déplacements correspondants entre adaptateur et moteur, sont admis
et **en ce que** le moteur et l'arbre de rotor (2) sont positionnés avec précision lors du vissage, à savoir que la position spatiale et l'alignement du flasque de moteur avec le carter de moteur et l'arbre de moteur (2) sont définis par le vissage, l'interface côté moteur, à savoir l'interface disposée entre la bride d'adaptateur (11) et le flasque de moteur côté A (12), à savoir le raccord de la bride d'adaptateur, étant réalisée avec une tolérance très petite, à savoir avec une grande précision,
le flasque de moteur côté sortie (12) comprenant un palier (25) pour l'arbre de rotor (22),
un accouplement à soufflet étant prévu comme premier moyen pour compenser les dilatations axiales,
l'accouplement à soufflet présentant une moitié d'accouplement côté moteur (50) et une moitié d'accouplement côté réducteur (58),
l'extrémité d'arbre cylindrique de l'arbre de rotor (2) pouvant être reliée au moyen de la bague de serrage (61) à une moitié d'accouplement côté moteur (58) qui présente une fente à cet effet,
la moitié d'accouplement côté réducteur (50) étant insérée dans l'arbre d'adaptateur (52), en particulier reliée à l'arbre d'adaptateur (52), en particulier par complémentarité de formes, conjugaison de forces et/ou liaison de matière,
un soufflet métallique étant soudé à ses zones d'extrémité axiales respectivement à la moitié d'accouplement côté réducteur (50) et à la moitié d'accouplement côté moteur (58).

2. Motoréducteur selon la revendication 1,
**caractérisé en ce qu'**un pignon creux (53) est prévu du côté sortie de l'arbre de rotor (22).

3. Motoréducteur selon au moins l'une des revendications précédentes,
**caractérisé en ce que** le réducteur est conçu avec un faible jeu, en particulier après réglage du jeu au moyen des déplacements, de telle sorte que le jeu soit inférieur à 6 ou 3 minutes d'angle par étage individuel de réducteur et/ou pour le réducteur dans son ensemble.

4. Motoréducteur selon au moins l'une des revendications précédentes,
**caractérisé en ce que** le réducteur présente un étage d'engrenage planétaire comme étage d'entrée.

5. Motoréducteur selon au moins l'une des revendications précédentes,
**caractérisé en ce que** l'interface (24) entre le flasque de moteur (12) et la bride d'adaptateur (11) ou entre la partie d'adaptateur (5) et le réducteur est réalisée dans chaque cas sous la forme d'une bride carrée ou d'une bride ronde.

6. Motoréducteur selon au moins l'une des revendications précédentes,
**caractérisé en ce que** le réducteur présente une extrémité d'arbre cylindrique du côté sortie.

7. Motoréducteur selon au moins l'une des revendications précédentes,
**caractérisé en ce que** le réducteur présente une interface bloc-bride selon la norme du côté sortie.
